# EUROPEAN PATENT APPLICATION

(11) **EP 3 045 956 A1**
(43) Date of publication of application: **20.07.2016**
(21) Application number: 14844308.8
(22) Date of filing: 22.08.2014
(51) Int. Cl.: G02B 27/02, H04N 5/64

(54) **HEAD-MOUNTED DISPLAY CAPABLE OF ADJUSTING IMAGE VIEWING DISTANCE**

(30) Priority: 10.09.2013 JP 2013186893
(71) Applicant: Telepathy Holdings Co. Ltd., Tokyo 103-0013 (JP)
(72) Inventor: IGUCHI, Takahito, Tokyo 103-0013 (JP)
(74) Representative: Pons
(86) International application number: PCT/JP2014/072071
(87) International publication number: WO 2015/037417

(57) **Abstract**

At a suitable timing, the present invention measures an observer's visual range and adjusts the projection distance of a virtual image. This head-mounted display includes: a display optical system (10) that displays a video; an eyepiece optical system (20) that projects the video displayed by the display optical system as a virtual image; a ranging unit (30) that measures the visual range to an object facing the observer's eye or to the observer's point of regard; a projection distance adjusting unit (40) that adjusts the projection distance of the virtual image projected by the eyepiece optical system on the basis of the visual range measured by the ranging unit; a view fluctuation detecting unit (50) that detects fluctuations in the observer's direction of view; and a control unit (60). If fluctuations in the observer's direction of view are detected by the view fluctuation detecting unit, the control unit transmits a control signal to the ranging unit so as to initiate measurement of the visual range.

## Description

### FIELD OF THE INVENTION

The present invention relates to a head mount display (HMD) attached to the head of an observer. More concretely, the HMD of the present invention has a structure in which an eyepiece optical system such as a prism is located in front of the eye of the observer and image light projected from a display optical system such as a liquid crystal display is guided to the optical pupil of the observer. As a result, the observer can visually recognize virtual images projected by the eyepiece optical system inside the field of vision of himself or herself. In particular, the HMD of the present invention is mainly intended to in a timely way adjust the distance of projection of virtual images in consistency with the visual distance from objects visually recognized by the observer.

### BACKGROUND ART

In recent years, demand is growing for wearable devices, defined as devices that can be attached to the body of users for use, such as HMDs used by attaching to the head. Furthermore, to name a few, computers and various types of sensor devices and image display devices including liquid crystal displays (LCDs) have been downsized to a size installable in wearable devices; wearable devices equipped with those devices are being developed at a rapid pace.

For example, conventional HMDs are disclosed in patent documents 1 and 2. Patent document 1 discloses a HMD equipped with a shutter that blocks all or part of external light. The HMD of patent document 1 is claimed to be able to provide a safe eyepiece display with less eye fatigue with which the observer can recognize the computer display screen while moving or working.

Patent document 2 discloses an HMD that can detect the visual distance from the eye of the observer to a gazing point and project virtual images at the detected gazing point. As described, the HMD of patent document 2 is equipped with a so-called auto-focus function. In particular, the HMD of patent document 2 has a structure to display three-dimensional images. That is to say, the HMD of patent document 2 generates image data of the original image comprising multiple pixels, distance data for each pixel, and display data of images blurred based on the visual distance. And then it displays images based on display data generated by the display element.

### PRIOR ART DOCUMENTS

### PATENT DOCUMENTS

Patent document 1: Patent Application Publication No. 1995-28021 Patent Application Publication No. 1998-239634

### SUMMARY OF THE INVENTION

### PROBLEMS TO BE SOLVED BY THE INVENTION

As indicated hereinbefore with the HMD disclosed in patent document 2, a technology with which the visual distance from the eye of the observer to the gazing point is measured and virtual images are projected at the gazing point is effective because the observer can visually recognize clear virtual images with no blur.

However, conventional HMDs continuously measure the visual distance between the observer and the gazing point and continuously adjust the projection distance of virtual images based on the measured visual distance. Continuous measurement of visual distance of the observer has a problem of inefficiency, such as in the increase in consumption of the battery installed in the HMD. For example, there are cases in which the visual distance of the observer is nearly constant for a long period of time, such as when the observer is reading. In such a case, even if the visual distance of the observer is measured, there is no need to adjust the projection distance of virtual images because the visual distance hardly varies. In spite of this fact, conventional HMDs have no feature to stop measurement of the visual distance of the observer when it does not vary and thus encompass problems from the viewpoint of energy loss such as battery consumption.

Therefore, a technology is currently desired that makes it possible to measure the visual distance in a timely manner with HMDs equipped with a feature to adjust the projection distance of virtual images based on the visual distance of the observer.

### Means for solving the problem

The inventor of the present invention, as a result of thoroughly considering means to solve the problem of the previous invention mentioned hereinbefore, discovered that the time when the visual distance of the observer needs to be measured is when the visual direction of the observer varies such as when the head of the observer moves. In other words, the inventor of the present invention gained knowledge that it becomes possible to suppress battery consumption by measuring the visual distance of the observer only when any variation in the visual direction of the observer is detected and by adjusting the projection distance of virtual images based on the result of this measurement. The present inventor realized that the problem of the prior art can be solved based on the knowledge above, and completed the present invention. The present invention has a structure that is described concretely as follows.

The present invention relates to a head mount display (HMD) attached to the head of an observer. The HMD of the present invention comes with a display optical system 10, an eyepiece optical system 20, a distance measuring unit 30, a projection distance adjusting unit 40, a visual direction variation detection unit 50, and a controlling unit 60. The display optical system 10 includes a display element for displaying images. The eyepiece optical system 20 projects, as virtual images, images displayed by the display optical system 10. That is to say, the eyepiece optical system 20 includes a prism to direct image light projected from the display optical system 10 to the optical pupil of the observer. The distance measuring unit 30 measures visual distance. "Visual distance" in this context means a distance to an object facing the eye of the observer, or a distance to a gazing point of the observer. "Visual distance" may be a distance from the sensor installed in the distance measuring unit 30 to an object facing the eye of the observer. Alternatively, "visual distance" may be a distance from the eye of the observer to a gazing point. The projection distance adjusting unit 40 has a feature to adjust the projection distance of virtual images projected by the eyepiece optical system 20 based on the visual distance measured by the distance measuring unit 30. The visual direction variation detection unit 50 detects variation in the visual direction of the observer. The controlling unit 60 sends out controlling signals to the distance measuring unit 30 that trigger measurement of the visual distance, when any variation in the visual direction of the observer is detected by the visual direction variation detection unit 50.

As shown in the structure above, the controlling unit 60 installed in the HMD of the present invention causes the distance measuring unit 30 to measure the visual distance only when any variation in the visual direction of the observer is detected by the visual direction variation detection unit 50. For example, if the visual direction is changed when the observer moves his or her head or shifts the line of sight, the distance measuring unit 30 measures the visual distance. Subsequently, based on the visual distance measured by the distance measuring unit 30, the projection distance adjusting unit 40 changes the projection distance of virtual images visually recognized by the observer. In this way, by measuring the visual distance when the visual direction of the observer has varied, it becomes possible to adjust the position of projection of virtual images in a timely and efficient manner. Therefore, the HMD of the present invention can suppress battery consumption.

In the structure of the HMD of the present invention, the visual direction variation detection unit 50 is preferably equipped with either a gyro sensor 51 or an acceleration sensor 52, or both of them. In addition, the visual direction variation detection unit 50 preferably determines that the visual direction of the observer has varied if the sensor has detected a change beyond a certain threshold.

As shown in the structure above, by equipping the HMD with the gyro sensor 51 and/or the acceleration sensor 52, it becomes possible to detect a change in the direction of the head of the observer. That is to say, the visual direction of the observer can be assumed to have been varied once the direction of the head of the observer has changed. Therefore, based on information obtained by the gyro sensor 51 or the acceleration sensor 52 or based on information drawn by combining information obtained by the gyro sensor 51 and the acceleration sensor 52, any variation in the visual direction of the observer can be properly detected.

In the structure of the HMD of the present invention, the visual direction variation detection unit 50 preferably determines that the visual direction of the observer has varied if a change beyond a certain threshold is detected by sensors (gyro sensor 51, acceleration sensor 52, luminance sensor 53) and a predetermined period of time elapses in which no change beyond the certain threshold is detected.

As shown in the structure above, by setting it a condition for starting to measure the visual direction that a predetermined period of time has elapsed in which no change beyond the certain threshold is detected, it becomes possible to prevent the visual distance being measured when not necessary. In other words, it is likely that variation beyond a certain threshold is detected many times in a short period of time by the gyro sensor 51 and the acceleration sensor 52 if the observer is running, for example. However, it can be said that it is almost meaningless to repeatedly measure the visual direction and repeatedly adjust the projection distance of virtual images when the observer is moving intensively. To that end, for example, it would be effective to measure the visual distance of the observer and adjust the projection distance of virtual images to the measured visual distance only when the observer is static and staring at any object for a few seconds (for example, 0.5 ∼ 3 seconds or longer). A preferable embodiment of the present invention can properly detect when the observer is staring at an object and adapt the projection distance of virtual images to the visual distance of the observer.

In the structure of the HMD of the present invention, the visual direction variation detection unit 50 may come with a luminance sensor 53. In this case, the visual direction variation detection unit 50 may determine that the visual direction of the observer has varied if the luminance sensor 53 has detected a change in luminance beyond a certain threshold.

In the structure described hereinbefore, for example, the visual distance of the observer can be measured when the field of vision of the observer becomes clear and wide even if the position of the head of the observer has not varied. An example situation of this is: the observer is in a car looking outside the window and the field of vision of the observer becomes clear and wide and the observer looks at an object further away when the car goes out of a dark tunnel into a bright area. Therefore, by measuring the visual distance of the observer if the luminance around the HMD varies beyond a certain range, it becomes possible to adjust the projection position of virtual images to a proper position.

### EFFECT OF THE INVENTION

The present invention makes it possible for an HMD equipped with a feature of adjusting the projection distance of virtual images based on the visual distance of the observer to measure the visual distance in a proper and timely manner, by installing in the HMD a visual direction variation detection unit which detects variation in the visual direction of the observer.

### BRIEF DESCRIPTION OF THE DRAWINGS

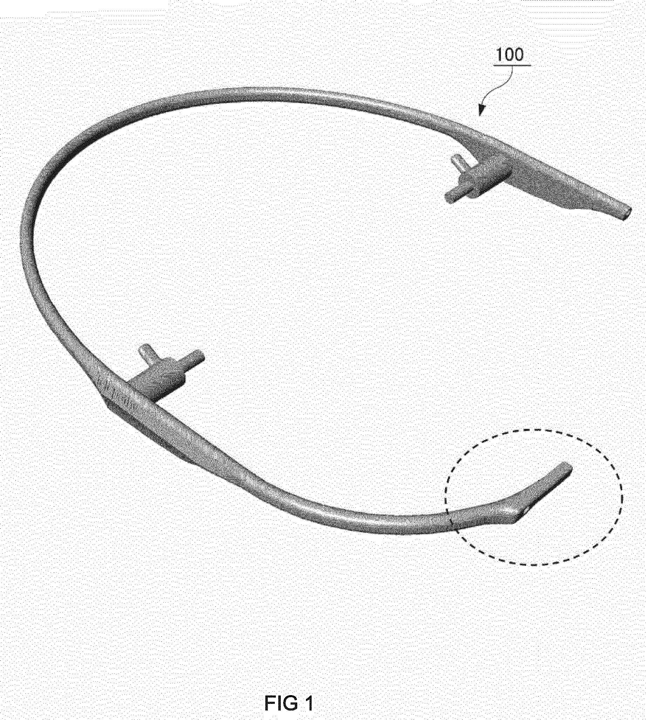

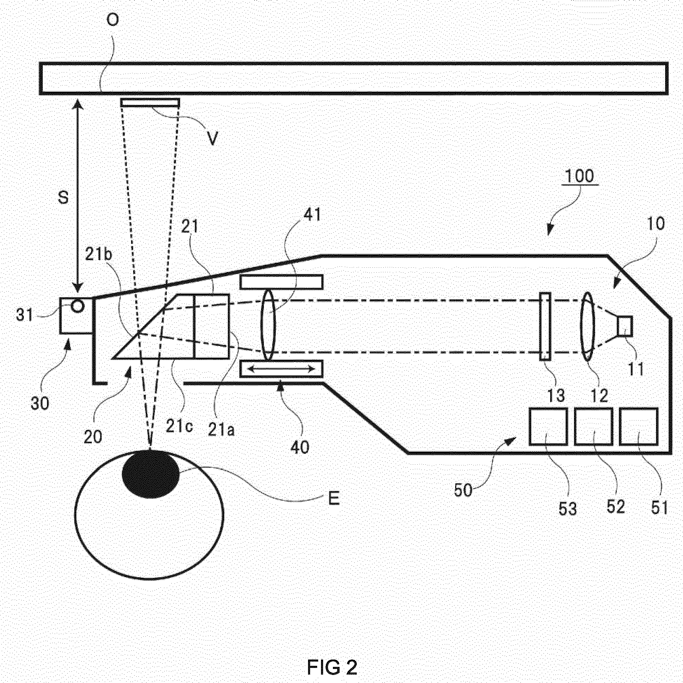

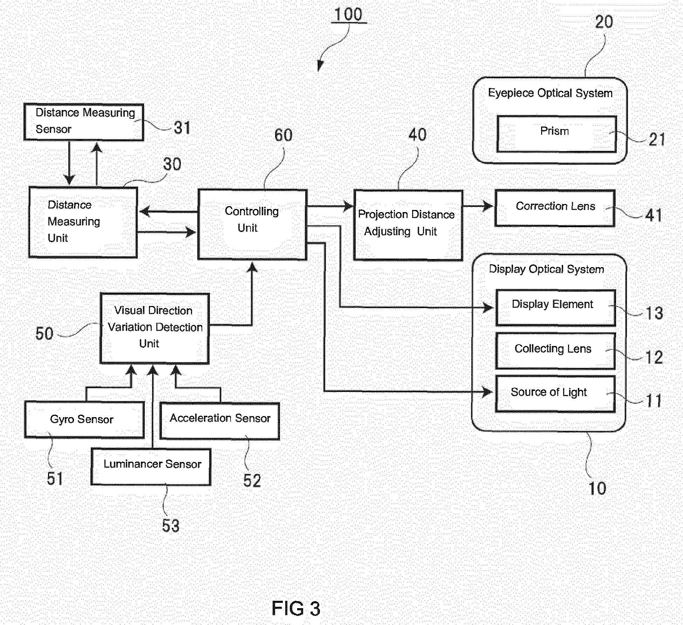

[Fig. 1] Fig. 1 is an external perspective view of an example embodiment of the HMD covered by the present invention. [Fig. 2] Fig. 2 is a block view of optical components of the HMD covered by the present invention. [Fig. 3] Fig. 3 is a functional block view of the HMD covered by the present invention.

### DESCRIPTION OF THE EMBODIMENTS

Hereinafter, an embodiment for working the present invention is described using drawings. The present invention is not limited to the embodiment described hereinafter, but includes amendments thereto made as needed by those skilled in the art to the extent obvious.

Fig. 1 is an external perspective view showing an example embodiment of the head mount display (HMD) covered by the present invention. [Fig. 2] Fig. 2 is a block view that schematically shows an optical system which guides image light to the optical pupil of the observer. In particular, Fig. 2 shows an image display device to be installed at the spot enclosed by dashed lines in Fig. 1. Fig. 3 is a functional block view showing various modules installed in a HMD 100.

As shown in Fig. 1, the HMD 100 of the present invention is a device attached to the head of an observer for use. The HMD 100 is equipped with an image display device (part enclosed by dashed lines) which is located in front of either eye of the observer (for example, the right eye). The HMD 100 can cause the observer to visually recognize images through this image display device.

As shown in Fig. 2 and Fig. 3, the HMD 100 of the present invention are equipped with the display optical system 10, the eyepiece optical system 20, the distance measuring unit 30, the projection distance adjusting unit 40, the visual direction variation detection unit 50, and the controlling unit 60. The controlling unit 60 is a CPU that comprehensively and electronically controls these modules.

To put it simply, the HMD 100 guides image light displayed by the display optical system 10 to the optical pupil E of the observer via the eyepiece optical system 20. The eyepiece optical system 20 projects as virtual images the images displayed by the display optical system 10, and the observer can visually recognize these virtual images. In addition, the HMD 100 is equipped with a so-called auto-focus function. That is to say, the HMD 100 measures the visual distance of the observer with the distance measuring unit 30. Subsequently, based on the measured value, this HMD adjusts the projection distance of virtual images with the projection distance adjusting unit 40 and displays virtual images in a position at which the observer can virtually recognize the virtual images in an easy way. Furthermore, HMD 100 of the present invention is equipped with the visual direction variation detection unit 50 for detecting variation in the visual direction of the observer. The controlling unit 60 sends out controlling signals to the distance measuring unit 30 that trigger measurement of the visual distance of the observer, when any variation in the visual direction of the observer is detected by the visual direction variation detection unit 50.

As shown in Fig. 1 and Fig. 2, the display optical system 10 comes with a source of light 11, a collecting lens 12, and a display element 13. The source of light 11 is preferably one that emits colors in R (red), G (green), and B (blue). The source of light 11 is preferably configured by an RGB-integrated LED panel. The source of light 11 may be one that emits a single color light or white light. The collecting lens 12 collects light from the source of light 11 and provides it to the display element 13. The display element 13 is a component that displays images by modulating the incident light depending on image data. The display element 13 is preferably configured by, for example, a transmission-type liquid crystal display in which pixels that serve as regions through which light passes are arranged in a matrix. To that end, a liquid crystal display (LCD) is used in the display optical system 10.

The eyepiece optical system 20 is an optical system that guides image light from the display element 13 described above to the optical pupil E. The eyepiece optical system 20 comes with a prism 21, for example. The prism 21 is a light guiding component that internally guides image light from the display element 13. The prism 21 is shaped to have an entrance surface 21 a, a total reflection surface 21b, and an exit surface 21 c for image light. The prism 21 may be configured by a single prism or in combination of multiple prisms. The entrance surface 21 a of the prism 21 is formed in the depth direction which vertically crosses with the optical axis of image light progressing in the lateral direction. The exit surface 21c is formed facing the optical pupil E of the observer. The total reflection surface 21 b is, for example, rectangular (oblong) and functions as a means to perpendicularly refract the optical path of image light. Concretely, the total reflection surface 21 b completely reflects in the depth direction the image light that enters the prism via the entrance surface 21 a and progresses in the lateral direction.

According to the configuration above, light projected from the source of light 11 is collected by the collecting lens 12 and then enters into the display element 13. This light is modulated by the display element 13 into image light. Subsequently, the image light projected from the display element 13 enters into the eyepiece optical system 20. In the eyepiece optical system 20, the image light enters into the prism 21 via the entrance surface 21 a. After that, the image light progresses inside the prism 21 in the lateral direction, and changes its direction with the optical path refracted by the total reflection surface 21b and progresses frontward in the depth direction. As a result, the image light is guided to the optical pupil E of the observer via the exit surface 21 c of the prism 21. In this way, the observer can see an enlarged virtual image of the image displayed by the display element 13 at the position of the optical pupil E.

That is to say, if the HMD of the present invention is attached, images displayed by the display optical system 10 reach the optical pupil E of the observer through the eyepiece optical system 20. The eyepiece optical system 20 produces an enlarged virtual image V at a position slightly distant from the actual position on the total reflection surface 21 b of the prism 21. In this way, the observer can visually recognize the virtual image V projected by the eyepiece optical system 20 and this image is seen as if hovering overlapped over the scene of the actual world.

The HMD of the present invention is further equipped with the distance measuring unit 30 and the projection distance adjusting unit 40. This structure makes it possible to implement on the HMD 100 an auto-focus function to automatically adjust the position of projecting the virtual image V.

First, the distance measuring unit 30 has a function to measure "visual distance" of the observer. "Visual distance" in this context means a distance to an object O facing the optical pupil E of the observer, or a distance from the optical pupil E to a gazing point of the observer.

In the example shown in Fig. 2, the distance from the distance measuring sensor 31 installed in the distance measuring unit 30 to the object O is defined as "visual distance". In this case, the distance measuring sensor 31 may be an active sensor equipped with a device to radiate/receive infrared light, ultrasonic waves, etc., or a passive sensor equipped with a CCD camera. For example, an active sensor can radiate infrared light or ultrasonic waves to the object O facing the optical pupil E of the observer, and detect the distance to the object O based on the time before a reflected wave returns or the radiation angle. On the other hand, a passive sensor can measure the distance to the object O based on images captured by the lens of a CCD camera. Passive-type methods to measure distance include methods in the public domain such as the phase difference detection method, contrast detection method, and passive external light method. The distance measuring sensor 31 is preferably attached near the eyepiece optical system (a position within a radius of 20 mm or less), for example.

In the embodiment of Fig. 2 and Fig. 3, an infrared sensor is used as the distance measuring sensor 31. The distance measuring sensor 31 radiates infrared light to the object O, and receives reflected waves. Information obtained by the distance measuring sensor 31 is sent to the distance measuring unit 30. The distance measuring unit 30 analyzes the information obtained with the use of the distance measuring sensor 31, and calculates the distance (visual distance) from the distance measuring sensor 31 to the object O. In Fig. 2, the visual distance is shown with the sign S.

However, although not shown in the figure, the "visual distance" of the observer may be defined as the distance from the optical pupil E of the observer to a gazing point. In this case, the distance measuring sensor 31 installed in the distance measuring unit 30 may be a sensor that observes the optical pupil E and detects the refractivity of the optical pupil E. The distance measuring unit 30 can, based on the refractivity obtained from the distance measuring sensor 31, identify the position of the gazing point focused on by the optical pupil E. In this way, the distance (visual distance) from the optical pupil E of the observer to a gazing point can also be measured by the distance measuring unit 30.

Once the visual distance is measured by the distance measuring unit 30, data on the measured visual distance is sent to the controlling unit 60. The controlling unit 60 sends the visual distance data to the projection distance adjusting unit 40. The projection distance adjusting unit 40 can adjust the projection distance of the virtual image V projected by the eyepiece optical system 20, based on the visual distance data.

As shown in Fig. 2 and Fig. 3, for example, the projection distance adjusting unit 40 comes with a correction lens 41. As shown in the embodiment of Fig. 2, the correction lens 41 is preferably located between the display optical system 10 and the eyepiece optical system 20 on the optical axis of image light projected from the display optical system 10.

The projection distance adjusting unit 40 adjusts the projection distance of the virtual image V, using the correction lens 41. The method for the projection distance adjusting unit 40 to adjust the projection distance of the virtual image V is not limited to a particular one; any method in the public domain can be used.

For example, in the embodiment shown in Fig. 2, the projection distance adjusting unit 40 has a feature to shift the correction lens 41 along the direction of progression of image light. That is to say, the projection distance adjusting unit 40 adjusts the area on which image light is collected on the total reflection surface 21 b of the prism 21, by shifting the physical position of the correction lens 41 back and forth. In this way, the projection distance adjusting unit 40 may adjust the projection distance of the virtual image V by adjusting the position of the correction lens 41.

For example, although not shown in a figure, the correction lens 41 may be a varifocal lens such as a liquid lens. For example, a liquid lens has a lens holder (container) in which solution and oil are filled, and can vary the shape of the boundary surface between the solution and oil by applying a voltage to the solution from the electrodes on the top and bottom of the container. Therefore, with a liquid lens, the boundary surface between solution and oil serves as the lens, and the focal distance can be adjusted through variation in the voltage. In this case, if a liquid lens is used as the correction lens 41, the projection distance adjusting unit 40 should have a feature to adjust the voltage to be applied to the electrodes of the correction lens 41. In this way, the projection distance adjusting unit 40 may adjust the projection distance of the virtual image V by adjusting the focal position of the correction lens 41 (liquid lens).

Alternatively, although not shown in a figure, the projection distance adjusting unit 40 may come with multiple correction lenses 41 with different focal positions (refractivity). Accordingly, the projection distance adjusting unit 40 may adjust the projection distance of the virtual image V by physically changing the type of the lens inserted between the display optical system 10 and the eyepiece optical system 20.

As described hereinbefore, the projection distance adjusting unit 40 can automatically adjust the projection distance of the virtual image V based on the data on the visual distance measured by the distance measuring unit 30.

Furthermore, HMD 100 of the present invention is equipped with the visual direction variation detection unit 50 for detecting variation in the visual direction of the observer. Upon detecting any variation in the visual direction of the observer, the visual direction variation detection unit 50 sends information to that effect to the controlling unit 60. The controlling unit 60 sends a signal to order the distance measuring unit 30 to start measuring the visual distance, only when such information is received from the visual direction variation detection unit 50. The distance measuring unit 30 does not measure the visual distance unless it receives an ordering signal from the controlling unit 60. In this way, it becomes possible to prevent the distance measuring unit 30 from continuously measuring the visual distance and accordingly suppress consumption of the battery (not shown) of the HMD 100.

In the embodiment shown in Fig. 2 and Fig. 3, the visual direction variation detection unit 50 comes with the gyro sensor 51 and the acceleration sensor 52. In addition, the visual direction variation detection unit 50 may come with the luminance sensor 53. These sensors - gyro sensor 51, acceleration sensor 52, and luminance sensor 53 - may be attached to any positions of the HMD 100; however, they are preferably located near the display optical system 10 or the eyepiece optical system 20. Because the gyro sensor 51, the acceleration sensor 52, and the luminance sensor 53 are sensors in the known art, sensors in the public domain may be used as needed.

To describe this concretely, the gyro sensor 51 detects the angular velocity of each of the three axises set on the HMD 100, and sends the angular velocity values corresponding to the detected angular velocity to the visual direction variation detection unit 50. The angular velocity values detected by the gyro sensor 51 vary in response to the direction (inclination angle) and movement of the HMD 100 itself. Therefore, the visual direction variation detection unit 50 can calculate the direction and movement of the HMD 100 using the angular velocity values obtained by the gyro sensor 51.

The acceleration sensor 52 detects the acceleration (including gravity acceleration) arising on the HMD 100, and sends the acceleration value corresponding to the detected acceleration to the visual direction variation detection unit 50. The acceleration value detected by the acceleration sensor 52 varies in response to the direction (inclination angle) and movement of the HMD 100 itself. Therefore, the visual direction variation detection unit 50 can calculate the direction and movement of the HMD 100 using the acceleration value obtained by the acceleration sensor 52.

The luminance sensor 53 detects the luminance (including brightness) of external light around the HMD 100, and sends the luminance value corresponding to the detected luminance to the visual direction variation detection unit 50. The luminance value detected by the luminance sensor 53 varies in response to factors such as the light quantity around the HMD 100. Therefore, the visual direction variation detection unit 50 can calculate the brightness of the space around the HMD 100 using the luminance value obtained by the luminance sensor 53.

The visual direction variation detection unit 50 can detect variation in the visual direction of the observer based on variation in each value obtained by the aforementioned gyro sensor 51, acceleration sensor 52, and luminance sensor 53. For example, the visual direction variation detection unit 50 can determine that the visual direction of the observer has varied if the angular velocity value detected by the gyro sensor 51 has changed beyond a predetermined threshold against a standard value. In addition, for example, the visual direction variation detection unit 50 can determine that the visual direction of the observer has varied if the acceleration sensor 52 value detected by the acceleration sensor 52 has changed beyond a predetermined threshold against a standard value. Similarly, the visual direction variation detection unit 50 can determine that the visual direction of the observer has varied if the luminance value detected by the luminance sensor 53 has changed beyond a predetermined threshold against a standard value. The visual direction variation detection unit 50 may be set up to detect variation in the visual direction not only using single data detected by sensors 51 ∼ 53 but by combining such data as needed.

For example, any change in the angular velocity value and/or acceleration value obtained by the gyro sensor 51 and the acceleration sensor 52 means that the head of the observer has changed its direction and/or moved. Accordingly, if the head of the observer changes its direction, the visual direction of the observer naturally varies. Furthermore, if the visual direction of the observer has varied, it can be assumed that the visual direction of the observer has changed. Therefore, by using data obtained by the gyro sensor 51 and the acceleration sensor 52 as triggers for measurement of the visual distance of the observer, it becomes possible to measure the visual distance in a timely manner (when an object visually recognized by the observer changes to another one).

In addition, any change in the luminance value obtained by the luminance sensor 53 means that the brightness of the environment around the observer has changed. In this way, using information obtained by the luminance sensor 53, it becomes possible to measure the distance of the observer when the visual direction of the observer turns clear and wide even if, for example, the position of the head of the observer has not changed. An example situation of this is: the observer is in a car looking outside the window and the field of vision of the observer becomes clear and wide and the observer looks at an object further away when the car goes out of a dark tunnel into a bright area. Therefore, by measuring the visual distance of the observer if the luminance around the HMD varies beyond a certain range, it becomes possible to adjust the projection position of virtual images to a proper position.

Furthermore, the visual direction variation detection unit 50 may determine that the visual direction of the observer has varied if any change beyond a certain threshold is detected by the aforementioned sensors 51 ∼ 53 and subsequently a predetermined period of time continues in which no change beyond the certain threshold is not detected. To describe an example using the gyro sensor 51, the visual direction variation detection unit 50 determines that the visual direction has varied only if the direction of the HMD 100 varied beyond a certain threshold and subsequently did not vary for a predetermined period of time. That is to say, if the visual distance is repeatedly measured when the data detected by the gyro sensor 51 is continuously and repeatedly changing, the projection distance of virtual images also changes easily, and it becomes rather difficult for the observer to visually recognize the virtual images. On the other hand, it is assumed that the angular velocity value obtained by the gyro sensor 51 does not change for a predetermined period of time when the observer is staring at an object (a building or book). By measuring the visual distance of the observer and adjusting the projection distance of virtual images only on such occasions, it becomes possible to cause the observer to properly recognize virtual images. "Certain period of time" in this context is a duration in which the observer stares at an object, and may be 0.5 ∼ 6 seconds, 1 ∼ 5 seconds, or 2 ∼ 4 seconds for example.

So far, a preferable embodiment of the visual direction variation detection unit 50 has been described; however, embodiments of the visual direction variation detection unit 50 that detect variation in the visual direction of the observer are not limited to the aforementioned embodiment. For example, the visual direction variation detection unit 50 may be equipped with a sensor which traces the movement of the pupil of the observer. In this case, the visual direction variation detection unit 50 can determine that the visual direction of the observer has changed if the pupil of the observer has moved.

As described hereinbefore, if the visual direction variation detection unit 50 determines that the visual direction of the observer has varied based on changes in data obtained by the aforementioned sensors 51 ∼ 53, that unit sends a signal to that effect to the controlling unit 60. The controlling unit 60 sends a signal to order the distance measuring unit 30 to start measuring the visual distance, only when such a signal is received from the visual direction variation detection unit 50. The distance measuring unit 30 measures the visual distance of the observer using the distance measuring sensor 31 and conveys the distance data to the controlling unit 60. The controlling unit 60 sends the visual distance data obtained from the distance measuring unit 30 to the projection distance adjusting unit 40. The projection distance adjusting unit 40 adjusts the projection distance of the virtual image V projected by the eyepiece optical system 20, by controlling the correction lens 41 based on the visual distance data. In this way, the present invention makes it possible to measure the visual distance of the observer and adjust the projection distance of virtual images in a timely manner when the visual direction of the observer has changed.

So far, in the specifications of the claimed invention, an embodiment was described with reference to drawings, in order to express the content of the present invention. However, the present invention is not limited to the embodiment described hereinbefore, and encompasses obvious modifications and improvements made by those skilled in the art based on the matters described in the specifications of the claimed invention.

### INDUSTRIAL APPLICABILITY

The present invention relates to a head mount display attached to the head of an observer. Therefore, the present invention is suitable and useful in the industry of manufacturing head mount displays.

### DESCRIPTION OF THE NUMERALS

10: Display optical system 11: Source of light 12: Collecting lens 13: Display element 20: Eyepiece optical system 21: Prism 21 a: Entrance surface 21b: Total reflection surface 21 c: Exit surface 30: Distance measuring unit 31: Distance measuring sensor 40: Projection distance adjusting unit 41: Correction lens 50: Visual direction variation detection unit 51: Gyro sensor 52: Acceleration sensor 53: Luminance sensor 60: Controlling unit.

## Claims

1. A head mount display equipped to the head of an observer comprising: a display optical system 10 which displays images; an eyepiece optical system 20 which projects images displayed by said display optical system 10 as virtual images; a distance measuring unit 30 that measures the visual direction to an object facing the eye of the observer or to a gazing point of said observer; a projection distance adjusting unit 40 that adjusts the projection distance of the virtual images projected by said eyepiece optical system 20 based on said visual distance measured by said distance measuring unit 30; a visual direction variation detection unit 50 that detects variation in the visual direction of said observer; and a controlling unit 60 that sends out a controlling signal that triggers said distance measuring unit 30 to start measuring said visual distance if any variation in the visual direction of said observer is detected by said visual direction variation detection unit 50.

2. A head mount display described in Claim 1 equipped with said visual direction variation detection unit 50 that is equipped with either a gyro sensor 51 or an acceleration sensor 52 or both of them, and that determines that the visual direction of said observer has varied if any change beyond a certain threshold is detected by said sensor(s).

3. A head mount display described in Claim 2 equipped with said visual direction variation detection unit 50 that determines that the visual direction of said observer has varied if any change beyond a certain threshold is detected by said sensor(s) and subsequently a predetermined period of time continues in which no change beyond the certain threshold is detected.

4. A head mount display described in any of Claim 1 through Claim 3 equipped with said visual direction variation detection unit 50 that is equipped with a luminance sensor 53, and that determines that the visual direction of said observer has varied if any change in the luminance beyond a certain threshold is detected by said luminance sensor 53.
